# EUROPEAN PATENT APPLICATION

(11) **EP 4 684 700 A1**
(43) Date of publication of application: **28.01.2026**
(21) Application number: 24775024.3
(22) Date of filing: 21.03.2024
(51) Int. Cl.: A47J 31/02, A47G 19/14

(54) **BEVERAGE EXTRACTOR**

(30) Priority: 21.03.2023 JP 2023062383
(71) Applicant: Suehiro, Mineji, Tokyo 160-0004 (JP)
(72) Inventor: Suehiro, Mineji, Tokyo 160-0004 (JP)
(74) Representative: Kuhnen & Wacker Patent- und Rechtsanwaltsbüro PartG mbB
(86) International application number: PCT/JP2024/080035
(87) International publication number: WO 2024/195893

(57) **Abstract**

[Problem]

To provide an extractor or dripper capable of maintaining or adjusting the temperature necessary for ideal component extraction during the extraction process of coffee or similar beverages.

[Solution]

The beverage extraction device 1 comprises an extraction chamber 2, in which the components of the extraction material are extracted by passing a liquid therethrough, and a temperature adjustment chamber 3. The temperature adjustment chamber 3 is provided outside the extraction chamber 2, with an inner side wall 20 or an inner bottom wall 23 serving as the partition. In order to adjust the temperature during the extraction process in the extraction chamber 2, a temperature-controlled temperature control medium is introduced into the temperature adjustment chamber 3 through an inlet 7. As a result, the extraction temperature of the liquid during the extraction process can be maintained or adjusted.

## Description

### TECHNICAL FIELD

The present invention relates to a beverage extraction device equipped with a temperature control mechanism.

### BACKGROUND ART

Extraction is conducted from various materials; for example, in the extraction of coffee or tea beverages, a manually operated extraction method in which hot water or cold water is poured manually for extraction has been conventionally known (References Cited: Reference No. 1 to Reference No. 10).

In the case of a coffee dripper (hereinafter referred to as "dripper") used in the handdrip (pour over) extraction method, which is one type of manual coffee extraction, a structure is formed comprising an extraction chamber with its upper end open and an extraction hole formed at the bottom or side of said extraction chamber. For example, a filter made of paper or metal is placed inside the extraction chamber of the dripper, coffee grounds are added inside the filter, and hot water is poured manually, whereby coffee liquid as a filtered extract is discharged from the extraction hole of the dripper and is collected in the underlying container. Furthermore, for tea extraction with a pot, an extract liquid in which components have been eluted from tea leaves immersed in hot water is filtered to separate or remove tea leaves at the time of separation or discharge.

The above-mentioned conventional drippers and pots used for beverage extraction are formed of metal, glass, ceramics, resin, rubber, or said composite materials, and the hot water poured inside them is deprived of heat by these utensils, the extraction materials such as coffee grounds or tea leaves, and the ambient atmospheric temperature, under conditions in which component extraction is performed.

Conventional beverage extraction devices lacked mechanisms for controlling the temperature inside the extraction chamber, which exerts a significant influence on the elution of components (hereinafter referred to as "elution phenomenon") and thereby on the resultant extract liquid during the several-minute extraction process that determines the taste, aroma, and nutritive components present in the extract. For example, References Cited [Reference No. 11] and [Reference No. 12] are directed at maintaining the flavor of the extract liquid after it has been obtained by conventional extraction methods, while References Cited [Reference No. 13] and [Reference No. 14] are directed at temperature maintenance by a double-walled structure using an air layer of low thermal conductivity to suppress diffusion of the heat of poured hot water; none of these disclose a mechanism for actively utilizing heat to perform "temperature control during the extraction process."

### CITATION LIST

### [Patent Literature]

Patent Literature 1: Japanese Patent Application Laid-open No. 2014-104155
Patent Literature 2: Japanese Patent Application Laid-open No. 2017-121355
Patent Literature 3: Japanese Unexamined Utility Model Application Publication No. 3116219
Patent Literature 4: Japanese Granted Utility Model Application Publication No. S58-11312
Patent Literature 5: Japanese Unexamined Utility Model Application Publication No. S62-127239
Patent Literature 6: Japanese Design Registration No. 1559619
Patent Literature 7: Japanese Unexamined Utility Model Application Publication No. H5-031733
Patent Literature 8: Japanese Patent Application Laid-open No. 2010-259454
Patent Literature 9: Japanese Unexamined Utility Model Application Publication No. S61-163578
Patent Literature 10: Japanese Unexamined Utility Model Application Publication No. 3217869
Patent Literature 11: Japanese Patent Application Laid-open No. H10-146277
Patent Literature 12: Japanese Patent Application Laid-open No. S62-211017
Patent Literature 13: Japanese Patent Application Laid-open No. 2008-194254
Patent Literature 14: Japanese Unexamined Utility Model Application Publication No. 3131257

### SUMMARY

### [Technical Problem]

For example, in the case of conventional extraction methods for coffee or tea beverages, during the several-minute extraction process from the start of pouring, including the blooming stage, until the completion of extraction, the temperature of the hot water used for extraction is continuously reduced due to the temperature of the dripper and extraction utensils such as filtration filters made of paper, cloth, metal, glass, or ceramic and extraction pots, as well as the temperature of the extraction materials such as coffee grounds or tea leaves themselves, and their respective physical properties such as thermal conductivity, specific heat, heat capacity, and volatility. This reduction in temperature occurs even during component elution, which consequently affects the extraction results. Furthermore, because heat continues to be lost to the surroundings due to the difference from the ambient temperature, it is an unstable condition in which it is difficult for the user to maintain the ideal temperature conditions required for desired component extraction.

As a conventional method for preventing heat loss factors that affect such elution phenomena and for maintaining the temperature of the hot water during the extraction process, preheating of utensils through hot water rinsing or water bath heating has been used. However, since the poured hot water immediately drains away from drippers or filters, which exert the greatest influence, warming thick pottery or glass, or drippers and filters made of resins or rubber having high specific heat, requires a large volume of hot water. As a result, invisible costs such as waste of water, energy, time, and effort occur each time extraction is performed, and the total amount of these losses becomes considerable.

For these reasons, a large number of general users have been obliged to compromise by employing non-ideal extraction methods in daily brewing, which has resulted in unfortunate situations where they cannot enjoy the original deliciousness or nutritional benefits.

Furthermore, conventional preheating by hot water rinsing or water bath heating is aimed solely at preventing the decrease of hot water temperature during the extraction process; it does not intend, for example, to perform heating, partial cooling in response to heat movement, or other temperature control operations to facilitate, inhibit, or stabilize the elution phenomenon.

The present invention aims to control the temperature inside the extraction chamber, which influences the elution phenomenon of components that determine the taste, aroma, and nutritional content of the extract liquid, so that the user can perform component extraction under ideal conditions. In addition, the present invention aims to provide an extraction device capable of stably maintaining or adjusting the temperature inside the extraction chamber during the several-minute period from the start to the completion of the extraction process.

### [Solution to Problem]

According to the present invention, there is provided a beverage extraction device comprising: an extraction chamber in which components of an extraction material are extracted by passing a liquid therethrough, and a temperature adjustment chamber disposed adjacent to the extraction chamber with a partition wall therebetween, wherein a temperature control medium is introduced into the temperature adjustment chamber for adjusting the temperature during the extraction process in the extraction chamber.

The temperature adjustment chamber is provided outside the extraction chamber, and the partition wall may constitute at least one of a side wall, a bottom wall, or a top wall defining the extraction chamber. The temperature adjustment chamber may be provided with an inlet through which the temperature control medium is introduced. Furthermore, a plurality of temperature adjustment chambers may be provided so that a plurality of temperature control media having different temperatures can be introduced simultaneously, or the same or different temperature control media can be introduced sequentially with a time difference. In addition, in the temperature adjustment chamber surrounding the extraction chamber, a plurality of bowl-shaped partition weirs may be arranged concentrically in a planar direction, such that the introduced fluid moves sequentially from the inner weir adjacent to the extraction chamber toward the outer weir, filling each section; in this way, temperature-controlled water may be introduced with a time difference for each partitioned section. Moreover, the extraction chamber may function as a coffee filter holder. That is, the beverage extraction device of the present invention may be a coffee dripper. A thermometer for indicating the temperature in the temperature adjustment chamber, and an electronic display for presenting information such as recipes indicating pouring amounts, timing, or extraction methods and materials, may be provided on the outer wall.

### [Effects of the Invention]

In conventional manually operated extraction devices, utensils with high thermal conductivity begin to lose heat to the environment or ambient temperature immediately after being rinsed with hot water, resulting in rapid temperature drop. Furthermore, utensils having large heat capacity for higher heat retention required considerable amounts of water and energy each time extraction was performed; yet, all such measures were only aimed at preventing heat from being lost to the utensils during the extraction process. According to the present invention, temperature control of the extraction chamber to accelerate, suppress, or stabilize the elution phenomenon which determines taste, aroma, and nutritional content of the extract liquid can be achieved easily and at low cost-by means of heat conducted from a temperature adjustment chamber filled with a temperature control medium such as overheated water.

Specifically, in conventional devices, immediately after pouring water, temperature changes due to heat transfer resulting from temperature differences with the utensils, extraction materials, and the environment affected the extraction result; however, in extracting coffee or tea, the use of high-temperature water in the temperature adjustment chamber of the present invention suppresses heat loss from the extraction chamber. In elution phenomena where taste, aroma, and nutrients change with a difference of 1°C or less, an optimal and stable temperature environment can be reliably reproduced and maintained by simple means.

Thus, for example, it becomes possible to avoid temperature ranges where off-flavors or astringency are easily extracted, or to reduce the exposure of the extract to such temperature bands, and thereby the user can accurately and easily reproduce the extraction of the desired taste and aroma components, regardless of environmental conditions such as season or region or the user's experience. As a result, even without advanced skills or knowledge, anyone, anytime, anywhere can easily brew delicious coffee or tea.

The proverbial problem-take the teapot to the kettle-can also be resolved. In the field of coffee, in addition to the conventional French press, high-quality light-roasted and specialty coffees are gaining attention and popularity for extraction methods that emphasize high temperatures. Furthermore, in low-temperature long-duration extractions (in the 60-80°C range) such as for coffee, black tea, or herbal tea, prevention of extraction temperature decrease (temperature retention) is critical for maintaining the beverage flavor, and the present invention, by enabling a stable optimal temperature environment, can also solve such issues.

Furthermore, in the process of establishing the optimal temperature environment, the enormous hidden costs of water, energy, labor, and time required for hot water rinsing or waterbath heating can be drastically reduced. For ordinary users who have had to compromise on their ideal extraction methods due to these costs, the present invention restores the joy and satisfaction of pursuing the ideal, thereby enabling them to enjoy the original deliciousness and nutritional benefits of their beverages.

Control of the elution environment by temperature, such as maintained-temperature extraction or temperature zone-limited extraction, becomes easily reproducible, enabling ideal component extraction. In addition, it is expected that new extraction methods actively utilizing heat (heat retention, heating, or cooling) and new recipes using these methods will give rise to novel deliciousness.

### BRIEF DESCRIPTION OF DRAWINGS

FIG.1 shows an explanatory diagram of a Type A extractor, where FIG. 1(a) is a schematic elevational cross-sectional view, and FIGs. 1(b) and 1(c) are two perspective views of embodiment examples having different external configurations.
FIG. 2 shows an explanatory diagram of a Type B extractor, where FIG. 2(a) is a schematic elevational cross-sectional view, and FIGs. 2(b) and 2(c) are two perspective views of embodiment examples having different external configurations.
FIG. 3 shows an explanatory diagram of a Type C extractor, where FIG. 3(a) is a schematic elevational cross-sectional view, and FIGs. 3(b) and 3(c) are perspective views of embodiment examples having different external configurations.
FIG. 4 shows an explanatory diagram of a Type D extractor, where FIG. 4(a) is a schematic elevational cross-sectional view, and FIG. 4(b) is a perspective view of an embodiment example.
FIG. 5 shows an explanatory diagram of a Type E extractor, where FIG. 5(a) is a schematic elevational cross-sectional view, and FIGs. 5(b) and 5(c) are two perspective views of embodiment examples having different external configurations.
FIG. 6 shows an explanatory diagram of a Type F extractor, where FIG. 6(a) is a schematic elevational cross-sectional view, and FIG. 6(b) is a perspective view of an embodiment example.
FIG. 7 shows an explanatory diagram of a Type G extractor, where FIG. 7(a) is a schematic elevational cross-sectional view (side view), and FIGs. 7(b) and 7(c) are two perspective views of embodiment examples having different external configurations.
FIG. 8 shows an explanatory diagram of a Type G extractor, where FIG. 8(a) is a schematic elevational cross-sectional view (front view), and FIGs. 8(b) and 8(c) are two perspective views of embodiment examples having different external configurations.
FIG. 9 shows an explanatory diagram of a Type H extractor, where FIG. 9(a) is a schematic elevational cross-sectional view, and FIGs. 9(b) and 9(c) are two perspective views of embodiment examples having different external configurations.
FIG. 10 shows an explanatory diagram of a Type I extractor, where FIG. 10(a) is a schematic elevational cross-sectional view, and FIG. 10(b) is a perspective view of an embodiment example.
FIG. 11 shows an explanatory diagram of a Type J extractor, where FIG. 11(a) is a schematic elevational cross-sectional view, and FIGs. 11(b) and 11(c) are two perspective views of embodiment examples having different external configurations.

### DESCRIPTION OF EMBODIMENTS

The extraction device of the present invention comprises an extraction chamber 2 for containing the extraction material and hot water, and a temperature adjustment chamber 3 for receiving the temperature control medium and performing temperature control of the inside of the extraction chamber 2. During the several-minute extraction process that determines taste and aroma, in order for the temperature inside the extraction chamber 2 not to be adversely affected by diffusion, the temperature inside the extraction chamber 2 is maintained, heated, or cooled through heat conduction by means of the temperature control medium introduced into the temperature adjustment chamber 3 and separated by a partition wall, thereby controlling to the user's ideal extraction temperature according to the extraction purpose.

In the present invention, for example, in extractors such as drippers or pots, a temperature adjustment chamber, which is an isolated space for receiving the temperature control medium for maintaining or immediately adjusting the water temperature required for the user's ideal component extraction in the extraction process, is provided adjacent to the extraction chamber. Here, "temperature control medium" refers to water with controlled temperature, heat generating agents, as well as cooling substances such as ice or cold storage materials.

For example, in the case of a dripper, a configuration is formed with an extraction chamber having an opening at the top and provided with a filter holder, the above-mentioned temperature adjustment chamber with an adjacent inlet, and an extraction hole opened at the bottom or side of the extraction chamber for discharging the extract liquid. In the case of a tea extraction pot, a configuration is formed with an extraction chamber for component elution and a temperature adjustment chamber with an adjacent inlet. By introducing the temperature control medium into these added temperature adjustment chambers, the temperature during the extraction process, which affects the promotion or suppression of the elution phenomenon in the adjacent extraction chamber, can be maintained, heated, or cooled to achieve ideal extraction according to the purpose.

The present invention permits control of the temperature inside the extraction chamber, which influences the elution phenomenon of extraction components; however, in order to extract the "extraction liquid ideal for the user", many influencing variables in addition to temperature are involved. Taking "delicious coffee" as an example:
Example:
- Coffee beans: variety, origin, roasting, aging, storage method
- Water: hardness, pH, molecular binding state (water molecules, minerals), ions
- Grinding: particle size, grinding type (disk type, conical type, propeller type)
- Utensils: extraction device, filter, pot (shape, material, heat retaining properties)
- Quantity: amount of coffee grounds, amount of hot water poured, extraction quantity (number of cups), thickness of water pour (pour rate)
- Temperature: water temperature, utensil temperature, coffee powder temperature (room temperature / refrigerated / frozen), ambient temperature
- Time: pouring time (speed, timing), extraction time (immersion / percolation)
- Technique: pouring position (point, range), pouring height, number of pours, variation in speed, etc.

All of the above factors are important for achieving ideal component extraction; however, for the purpose of explaining the function of the present invention, factors other than temperature control-including the temperature of the water used for extraction-will be considered the same in the following description.

As a specific example, in extraction of coffee or tea using conventional manually operated extractors that lack a temperature control mechanism, even when the utensils are preheated with hot water, during an extraction process, for example, of two and a half minutes, a decrease in extract liquid temperature of about 10°C to 7°C occurs (at room temperature of 24°C). Note: The degree of temperature drop depends on the amount and initial temperature (100-65°C) of the water used for extraction.

The influence exerted on the extraction material-such as decreased cell membrane function, differences in osmotic pressure, and diffusion-varies with each contact temperature range caused by the aforementioned temperature changes resulting from water pouring temperature and heat loss. As a result, differences occur in the extraction components, which constitute the taste, aroma, and nutrients. These temperature changes in the extraction process exert an extremely large influence on the elution phenomenon, by which taste, aroma, and nutrients are altered by differences of 1°C or even less. However, this process has heretofore remained uncontrolled and subject to diffusion.

For achieving ideal extraction, temperature decrease in the extraction process caused by diffusion has been a detrimental variable. According to the present invention, heat that was previously lost by natural law in conventional extractors can now be controlled by means of the above-mentioned temperature adjustment chamber, making it possible to achieve an ideal extraction temperature. In other words, by simply adding the extraction device of the present invention to the usual materials, utensils, and methods used for extracting coffee or other beverages, extraction under temperature control is rendered possible. For instance, by introducing water already adjusted to the desired temperature into the temperature adjustment chamber in advance and bringing the inner wall temperature of the empty extraction chamber to the temperature suitable for ideal component extraction in the water-pouring process, it becomes possible-during the several-minute extraction process that determines taste, aroma, and nutrients-to prevent any detrimental effect on the delicate elution phenomenon due to heat diffusion and to achieve ideal component extraction through active temperature control, for example by maintaining, raising, or limiting the temperature drop of the extract liquid to only 3°C.

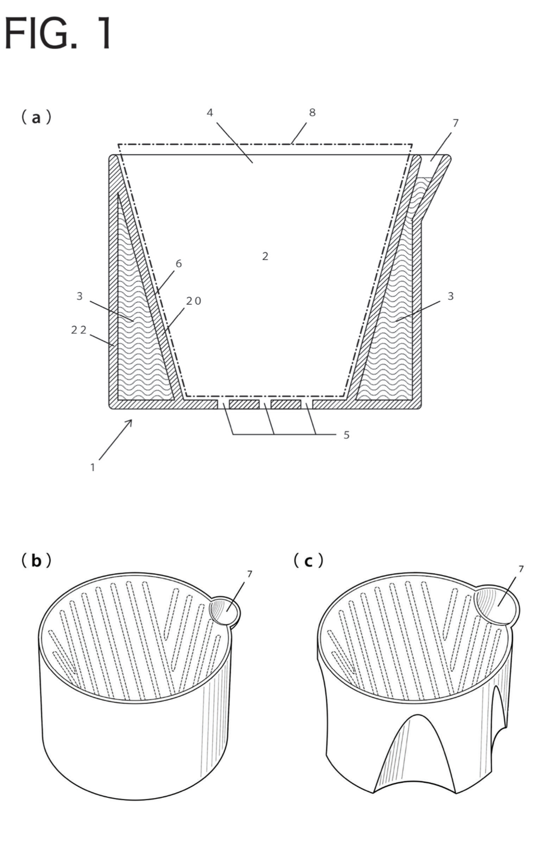

The embodiments for carrying out the present invention will be explained with reference to the drawings. The beverage extraction device of the present invention related to this application comprises an extraction chamber 2 and a temperature adjustment chamber 3 and is formed of a material having waterproof and heat-resistant properties such as metal, glass, ceramics, stone, resin, rubber, wood, bamboo, fiber, leather, or paper. FIGs. 1 to 11 show eleven embodiments of extractors differing in shape, material, filtration filter, and consequently in filtration method, temperature control method, and extract discharging method. These figures are schematic elevational sectional views and perspective views of embodiment examples, illustrating the structure and characteristic configuration of the mechanism of the present invention.

The extractor 1 shown in FIGs. 1 to 6 is provided with an extraction chamber 2, and a temperature adjustment chamber 3 which is an independent space for receiving a temperature control medium to adjust the temperature of hot water during the extraction process in the extraction chamber. The chamber 3 is arranged adjacent to the extraction chamber along an inner wall (surface) between the upper pouring port 4 and the extraction hole 5, with the wall portion serving as a partition, and may be positioned at the bottom, side, top, or any combination thereof. The extraction chamber 2 is, for example, an inner space of an extraction container of conical or trapezoidal shape as seen in a commercially available coffee dripper. In the extractor 1 of the present invention, this extraction container has a two-layered or double-wall structure. That is, an outer side wall and an outer bottom wall are provided so as to cover from the outside the side wall (hereinafter referred to as "inner side wall") and the bottom wall (hereinafter referred to as "inner bottom wall") that define the extraction chamber (filter holder 6). The space between the inner and outer side walls, and the space between the inner and outer bottom walls, constitute the temperature adjustment chamber 3.

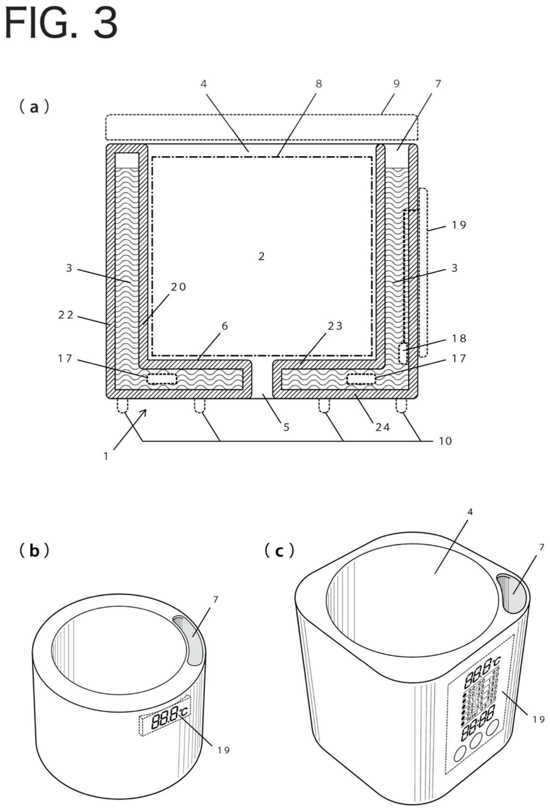

Specifically, in extractors 1 shown in FIGs. 1, 2, 4, 5, 6, 9, 10, and 11, as seen in the sectional views, only the side wall is of double-layer structure, and the space between the inner side wall 20 and the outer side wall 22 constitutes the temperature adjustment chamber 3. In contrast, in the extractor shown in FIG. 3, both the side wall and bottom wall are of double-layer structure, and not only the space between the inner side wall 20 and outer side wall 22 but also the space between the inner bottom wall 23 and outer bottom wall 24 constitute the temperature adjustment chamber 3.

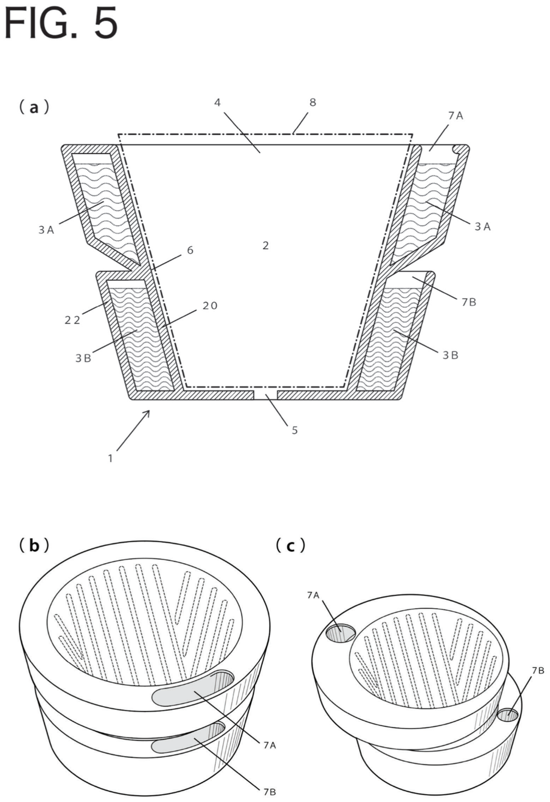

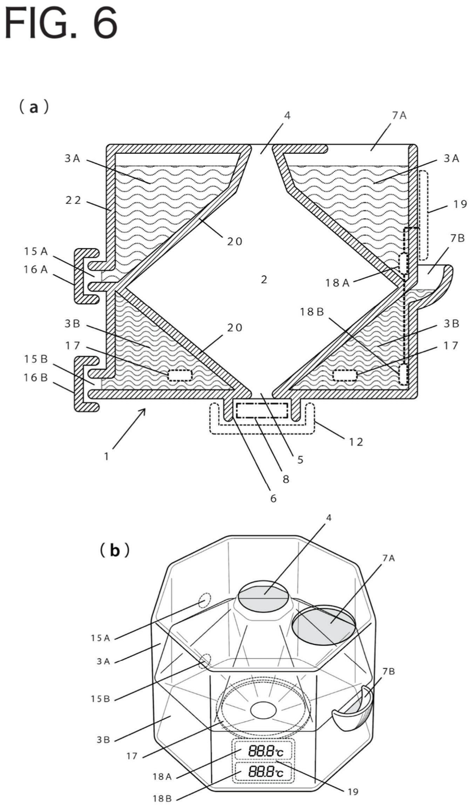

In the extractors 1 shown in FIGs. 5 and 6, the temperature adjustment chamber 3 between the inner side wall 20 and outer side wall 22 is divided vertically into two sections, where the divided upper temperature adjustment chamber 3A and lower temperature adjustment chamber 3B are independent spaces. The two temperature adjustment chambers 3A and 3B can be filled with fluids at different temperatures, such as high and low temperature, so that the temperature inside the extraction chamber 2 becomes uniform through diffusion without mixing. Each temperature adjustment chamber is provided with its own inlet ports 7A and 7B.

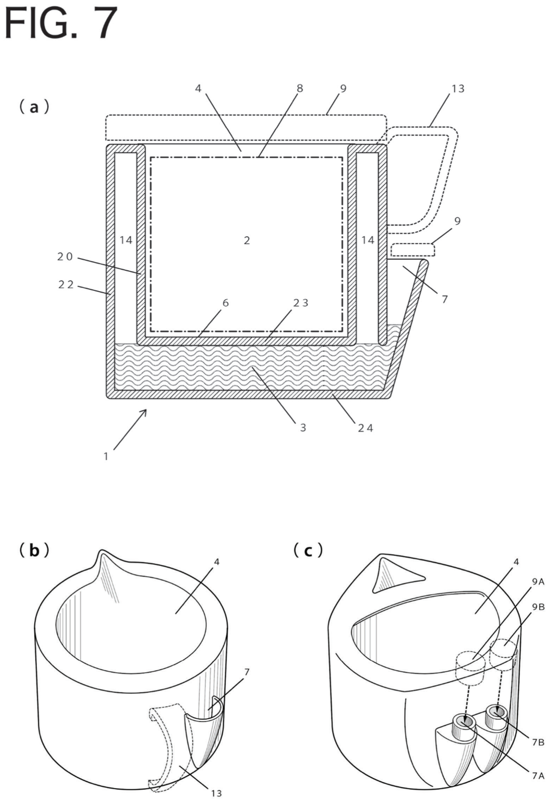

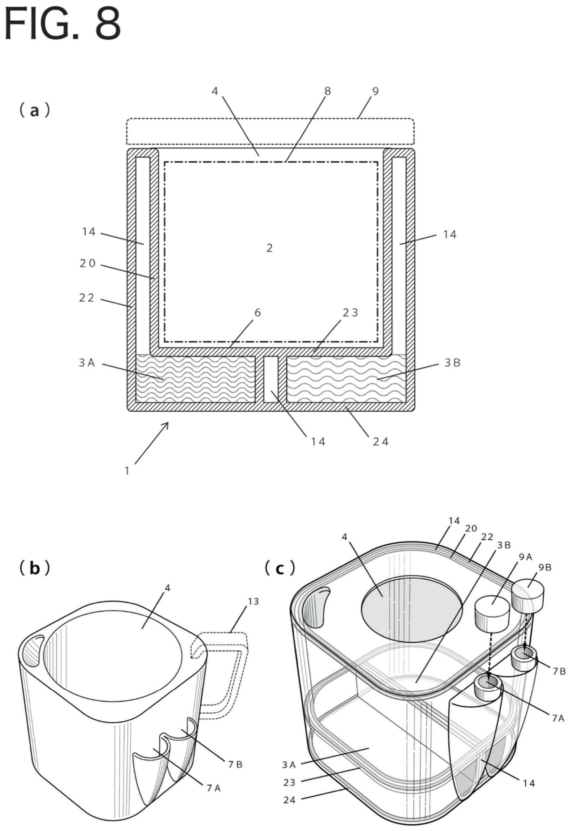

FIGs. 7 and 8 show extractors having no extraction hole for discharging extract liquid, in which the extraction chamber 2 and the temperature adjustment chamber 3 for controlling the water temperature during the extraction process are disposed adjacent to each other with the bottom (inner bottom wall 23) of the extraction chamber serving as the partition wall. These are embodiments of immersion-type extractors for coffee, tea, or herbal tea, with the space between the inner bottom wall 23 and outer bottom wall 24 forming the temperature adjustment chamber 3. The space 14 between the inner side wall 20 and outer side wall 22 may either be sealed off from or communicate with the temperature adjustment chamber 3, functioning as a heat-retaining space.

FIG. 8 shows a front view of a modified embodiment derived from FIG. 7, in which the temperature adjustment chamber 3 is divided into two parts in a planar direction. The divided left temperature adjustment chamber 3A and right temperature adjustment chamber 3B are independent spaces. The two temperature adjustment chambers 3A and 3B can be filled with fluids of different temperatures, such as high and low, to make the temperature inside the extraction chamber 2 uniform by diffusion without mixing. Alternatively, the same temperature control fluid may be sequentially introduced with a time difference to allow extended temperature control. Each of the temperature adjustment chambers in FIGs. 7 and 8 is provided with inlet ports 7A and 7B respectively. The space 14 between the chambers 3A and 3B functions as a heat-retaining space to prevent thermal interference.

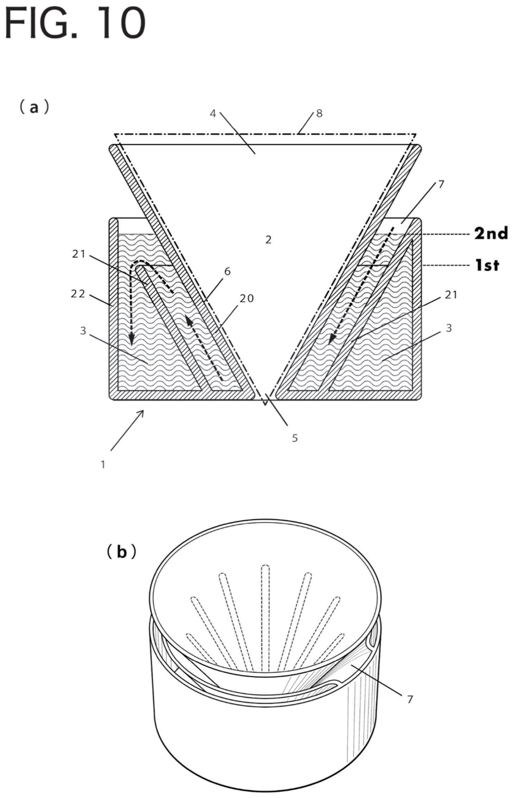

FIG. 10 shows an embodiment in which bowl-shaped partition weirs are provided concentrically in a planar direction within the temperature adjustment chamber 3 surrounding the extraction chamber 2. As shown in FIG. 10(a), temperature-controlled fluid can be introduced in two stages (1st and 2nd) with a time difference. First, fluid is poured up to the 1st position to fill the weir adjacent to the extraction chamber 2 defined by the intermediate wall 21 and to heat the extraction chamber to a desired temperature. Then, fluid of the same or a different temperature can be added across the weir up to the 2nd position, allowing two-step temperature control of the extraction chamber 2.

FIG. 10 shows an embodiment in which bowl-shaped partition weirs are provided concentrically in a planar direction within the temperature adjustment chamber 3 surrounding the extraction chamber 2. As shown in FIG. 10(a), temperature-controlled fluid can be introduced in two stages (1st and 2nd) with a time difference. First, fluid is poured up to the 1st position to fill the weir adjacent to the extraction chamber 2 defined by the intermediate wall 21 and to heat the extraction chamber to a desired temperature. Then, fluid of the same or a different temperature can be added across the weir up to the 2nd position, allowing two-step temperature control of the extraction chamber 2.

The temperature adjustment chamber 3 can be equipped in any extraction chamber 2 depending on the purpose, so the extractor 1 of this application is not limited to the specific structures illustrated in FIGs. 1 to 11 with respect to shape (external or internal), the type of filtration filter 8, the number, size, or shape of the extraction holes 5, or any other configuration. Although the basic plan view shape of the top and bottom surfaces is substantially circular, other shapes such as polygonal or irregular shapes may also be used.

The extractor 1 of the present invention may be integrally formed from a single material as described above, or may be overall assembled from components made of different materials such as metal and resin. For example, if the partition wall between the extraction chamber 2 and the temperature adjustment chamber 3-that is, the surrounding wall or bottom wall defining the extraction chamber 2-is formed from a high thermal conductivity metal wall or a thin wall with low specific heat, heat transfer between the chambers is facilitated. Additionally, if the outer wall of the temperature adjustment chamber 3 exposed to the atmosphere is made of resin or another material with low thermal conductivity, adverse effects such as heat loss from diffusion can be reduced. It is preferred to use materials such as copper, stainless steel, reinforced porcelain, or fine ceramics for the partition wall.

As illustrated in FIGs. 3, 4, 7, 8, and 11, installing a lid 9 on the pouring port 4 or the inlet port 7, where heat diffusion is prone to occur, is effective in preventing heat loss and the intrusion of foreign matter. The shapes of the pouring port 4 and inlet port 7 are arbitrary. The pouring port 4 may be circular or polygonal, as in an ordinary coffee dripper. The inlet port 7 may be of any shape suitable for introducing the temperature control medium (such as heated water or ice) according to the extraction objective or application, such as camping. It may be partially or completely circumferential to the extraction chamber 2 to any extent. Further, the temperature control medium may be introduced and sealed completely, allowing use in a microwave oven or similar appliance.

As illustrated in FIGs. 1, 2, 6, 7, and 9, narrowing the opening between the inlet port 7 and the temperature adjustment chamber 3 is effective in preventing heat in the temperature adjustment chamber 3 from diffusing outward.

The extractor of the present invention has been specifically illustrated in the figures, but various modifications are possible, such as forming the outer wall of the temperature adjustment chamber 3 from transparent resin to make it easier to visually confirm extract drip.

As illustrated in FIG. 3(a), stopper legs 10 to prevent falling may be added.

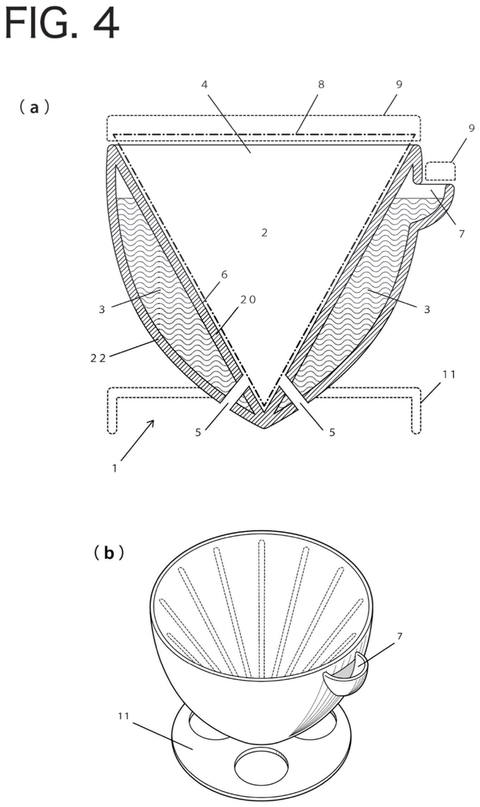

As illustrated in FIG. 4, a flange 11 for stabilizing installation may be added.

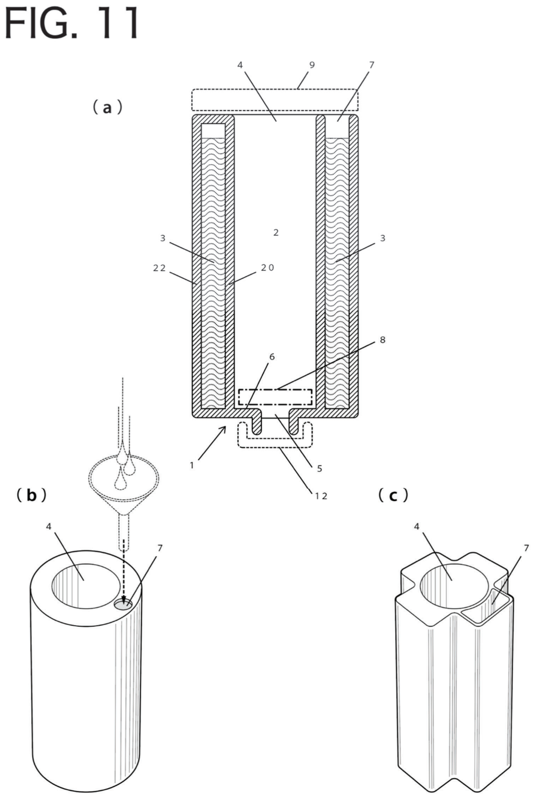

As illustrated in FIGs. 6 and 11, an openable/closable extraction hole plug 12 may be added.

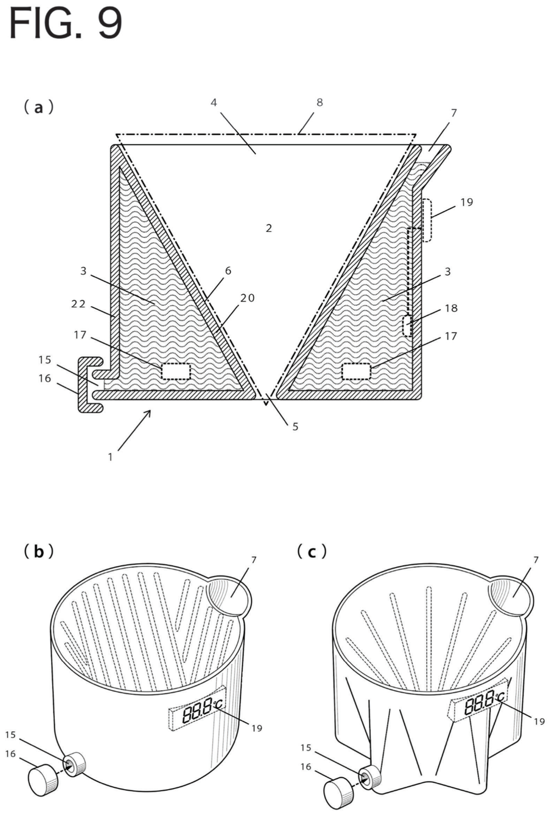

As illustrated in FIGs. 6 and 9, an openable/closable drain hole 15 and a drain hole plug 16 may be added to the temperature adjustment chamber.

As illustrated in FIG. 7, a handle 13 may be added.

As in FIG. 7(a), combining a heat-retaining space 14 with the temperature adjustment chamber 3 can be used to prevent heat loss.

As illustrated in FIGs. 3(a), 6(a), and 9(a), installation of a small heater 17 within the temperature adjustment chamber 3 of the extractor 1 of the present invention allows temperature control of the temperature adjustment chamber 3. This enables continuous extraction at an optimum, controlled temperature environment, shortening extraction time without the need to replace the water or fluid in the temperature adjustment chamber for each operation. Compared with a water bath, the temperature adjustment chamber 3 to be heated is extremely small, allowing energy-efficient operation and further reduction of unnecessary cost. Use with batteries is also possible, even in locations with no power supply or outdoors.

A thermometer 18 for confirming the temperature inside the temperature adjustment chamber 3 and a display panel 19 for displaying measured values may be provided on the outer wall 22 or other location, as illustrated in FIGs. 3, 6, and 9. With the thermometer 18, it becomes possible to visualize whether the temperature adjustment chamber 3 is controlled to the desired temperature in relation to the temperature of the hot water introduced into the extraction chamber 2. Any type of thermometer may be used, such as a digital thermometer with numerical indication or a film that displays temperature by color. Furthermore, as illustrated in FIG. 3(c), items other than temperature, such as recipes indicating the amount and timing of hot water pouring, or information related to the extraction method or materials, may also be shown on an electronic display used as the display panel.

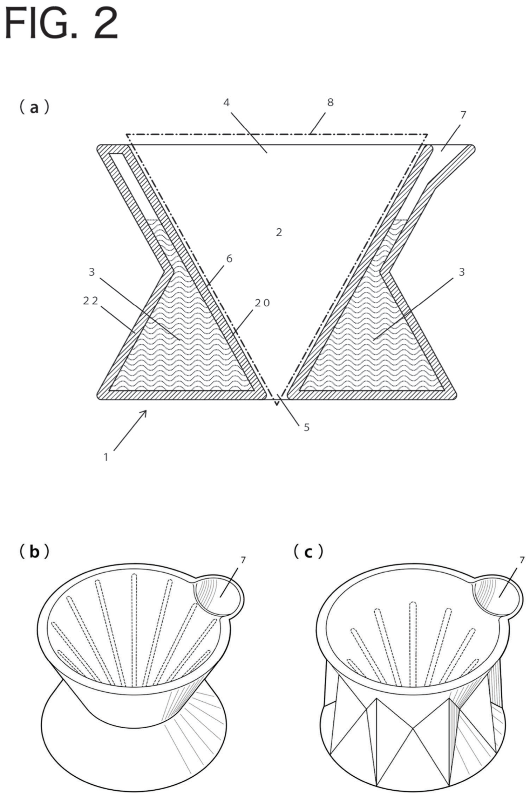

The basic structure of the present invention is depicted in explanatory diagrams in FIGs. 1 to 11. In each drawing, (a) is a schematic elevational sectional view, and (b) is a perspective view of an example embodiment. These explanatory drawings are examples for explaining the invention, and in actual practice there could be countless structural variations and shapes, including different designs for temperature control functionality or according to the purpose or material. For example, as in the perspective view in FIG. 1(c), which assumes a fanshaped extractor, the outer wall 22 may be deformed to any desired shape, which does not impair the temperature control functionality. In FIG. 2, which is a conical type extractor, the upper and lower center of the outer wall 22 is constricted, which enables the amount of the temperature control medium introduced into the temperature adjustment chamber 3 to be reduced. As in the perspective view in FIG. 2(c), a columnar projection may also be provided, allowing the extractor to be gripped even when hot by minimizing contact area.

Also, as in the perspective view in FIG. 3(c), the outer shape of the extractor 1 may be prismatic rather than cylindrical as in FIG. 3(b). In this case, the inlet 7 may be provided at the corner of the prismatic shape as shown in FIG. 3(c).

Additionally, as in the perspective view in FIG. 5(c), an external shape different from that in FIG. 5(b) may be adopted for the same extraction chamber 2. As long as the temperature adjustment chamber 3, regardless of deformation, can conduct heat to the extraction chamber 2 with a fluid temperature control medium, the temperature control functionality is not impaired and the outer configuration is unrestricted.

Furthermore, FIGs. 7(b) and 7(c) show the effect of the presence or absence of partitioning of the temperature adjustment chamber 3, and the different number of inlets provided for each temperature adjustment chamber can be determined from the appearance.

FIGs. 8(b) and 8(c) have similar external shapes, and both can introduce the temperature control medium with a time lag, but the interior of the extraction chamber 2 differs in being either round or square.

Further, as in the perspective view in FIG. 9(c), the lower outer shape of the extractor 1 may be made to have a six-pointed star or other configuration instead of a cylinder as shown in FIG. 9(b). In this case, the amount of temperature control medium introduced into the temperature adjustment chamber 3 can be reduced, contributing to a reduction of energy or resource costs for water and heating in the case of hot fluid temperature control media.

The example shown in the perspective view in FIG. 11(c) has a cross-shaped prismatic section for the extractor 1, unlike the cylindrical form shown in FIG. 11(b). The shape of the inlet 7 may be any as long as it allows introduction of the temperature control medium into the temperature adjustment chamber 3, and in the case of a small or difficult-to-introduce opening, an auxiliary tool such as a funnel, as shown in FIG. 11(b), may be used for introduction.

While embodiments of the present invention have been explained as beverage extractors, it is not limited to coffee or tea, but can also be applied to cooking soups, oil, or any extraction or filtration of liquids containing solids.

### [Reference Signs List]

1 Extractor
2 Extraction chamber
3 Temperature adjustment chamber
4 Pouring port
5 Extraction hole
6 Filter holder
7 Inlet
8 Filtration filter
9 Lid
10 Stopper leg
11 Flange
12 Extraction hole plug
13 Handle
14 Heat-retaining space
15 Drain hole
16 Drain hole plug
17 Heater
18 Thermometer
19 Display panel
20 Inner side wall
21 Intermediate side wall
22 Outer side wall
23 Inner bottom wall
24 Outer bottom wall

## Claims

1. A beverage extraction device comprising: an extraction chamber in which components of an extraction material are extracted by passing a liquid therethrough; and a temperature adjustment chamber provided adjacent to said extraction chamber with a partition wall therebetween, wherein a temperature control medium is introduced into said temperature adjustment chamber for adjusting the temperature during the extraction process in said extraction chamber.

2. The beverage extraction device according to claim 1, wherein said temperature adjustment chamber is provided outside said extraction chamber, and said partition wall is at least one surface selected from the group consisting of a side wall, a bottom wall, and a top wall that define said extraction chamber.

3. The beverage extraction device according to claim 2, wherein said temperature adjustment chamber is provided with an inlet for introducing said temperature control medium.

4. The beverage extraction device according to claim 2, wherein a plurality of said temperature adjustment chambers are provided so that a plurality of temperature control media having different temperatures can be introduced, or the same temperature control medium can be introduced sequentially with a time difference.

5. The beverage extraction device according to claim 2, wherein said temperature adjustment chamber is provided with a plurality of bowl-shaped partition weirs arranged concentrically in a planar direction so as to surround said extraction chamber, such that the introduced water moves from the inner weir adjacent to said extraction chamber to the outer weir to sequentially fill each section.

6. The beverage extraction device according to any one of claims 1 to 5, wherein said extraction material is coffee grounds, said temperature control medium is heated water, and said extraction chamber functions as a coffee filter holder.

7. The beverage extraction device according to claim 6, wherein a thermometer for indicating the temperature inside said temperature adjustment chamber or an electronic display for presenting information such as a recipe indicating pouring amount, pouring timing, extraction methods, or information regarding the extraction material is provided on the outer wall.

## Amended claims

### Amended claims under Art. 19.1 PCT

1. A beverage extraction device comprising: an extraction chamber in which components of an extraction material are extracted by passing a liquid therethrough; and a temperature adjustment chamber provided outside and adjacent to said extraction chamber, wherein at least one surface selected from the group consisting of a side wall, a bottom wall, and a top wall defining said extraction chamber serves as a partition wall between said extraction chamber and said temperature adjustment chamber; said temperature adjustment chamber surrounds said extraction chamber; and a plurality of bowl-shaped partition weirs are arranged concentrically with respect to said extraction chamber in a planar direction, such that, after the introduced temperature control medium fills the inside of the weir adjacent to said extraction chamber, it moves outward of the weir to adjust the temperature during the extraction process in said extraction chamber.

2. The beverage extraction device according to claim 1, wherein said temperature adjustment chamber is provided with an inlet for introducing said temperature control medium.

3. The beverage extraction device according to claim 1, wherein a plurality of said temperature adjustment chambers are provided so that a plurality of temperature control media having different temperatures can be introduced or the same temperature control medium can be introduced sequentially with a time difference.

4. The beverage extraction device according to any one of claims 1, 2, or 3, wherein said extraction material is coffee grounds, said temperature control medium is heated water, and said extraction chamber functions as a coffee filter holder.

5. The beverage extraction device according to claim 4, wherein a thermometer for indicating the temperature inside said temperature adjustment chamber or an electronic display for presenting information such as a recipe indicating pouring amount, pouring timing, extraction methods, or information regarding the extraction material is provided on the outer wall.
